Europäisches Patentamt

European Patent Office

Office européen des brevets

(11) Veröffentlichungsnummer: **0 278 375 B1**

(12) **EUROPÄISCHE PATENTSCHRIFT**

(45) Veröffentlichungstag der Patentschrift: **25.03.92**

(21) Anmeldenummer: **88101524.2**

(22) Anmeldetag: **03.02.88**

(51) Int. Cl.⁵: **C09J 201/00**

(54) Thermostabile Gummi/Metall-Bindemittel.

(30) Priorität: **11.02.87 DE 3704152**

(43) Veröffentlichungstag der Anmeldung:
**17.08.88 Patentblatt 88/33**

(45) Bekanntmachung des Hinweises auf die
Patenterteilung:
**25.03.92 Patentblatt 92/13**

(84) Benannte Vertragsstaaten:
**AT BE CH DE ES FR GB IT LI NL SE**

(56) Entgegenhaltungen:
**FR-A- 2 104 278**
**GB-A- 877 923**

(73) Patentinhaber: **Henkel Kommanditgesellschaft
auf Aktien**
**Postfach 1100 Henkelstrasse 67**
**W-4000 Düsseldorf-Holthausen(DE)**

(72) Erfinder: **Scheer, Hans**
**Am Falder 77**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Thermostabile Gummi/Metall-Bindemittel

Die vorliegende Erfindung betrifft Haftvermittler bzw. Bindemittel zur Herstellung von Verbundkörpern durch Aufvulkanisieren von Kautschukmischungen auf Metalle und andere unter Vulkanisationsbedingungen stabile Substrate.

Zur Herstellung von Gummi/Metall-Verbundkörpern wählt man in der Kautschuk verarbeitenden Industrie aus ökonomischen Gründen in zunehmendem Maße höhere Vulkanisationstemperaturen bei einer verkürzten Heizzeit. Um die gewünschten in der Kautschuktechnologie erforderlichen Werte, insbesondere von Naturkautschukmischungen, unter solchen veränderten Vulkanisationsbedingungen zu erzielen, müssen schwefelarme Vernetzungssysteme eingesetzt werden. Solche Systeme beeinflussen jedoch das Bindeverhalten deutlich, und zwar in der Regel in negativer Hinsicht. Insbesondere dann, wenn zusätzlich die mit Bindemittel beschichteten Metallteile einer verlängerten Vorheizzeit ausgesetzt sind, erhält man häufig fehlerhafte Verbundkörper.

Aufgabe der vorliegenden Erfindung war daher die Entwicklung eines Gummi/Metall-Bindemittels, das unter den beschriebenen Vulkanisationsbedingungen eine gute Vorheizbeständigkeit aufweist und insbesondere bei Naturkautschukmischungen, aber auch bei synthetischen Kautschukmischungen wie solchen aus Styrol-Butadienkautschuk, Nitrilkautschuk oder auch Butylkautschuk zu guten Bindungen zwischen Kautschuk und Substrat führt.

Diese Aufgabe konnte gelöst werden durch ein thermostabiles Gummi/Metall-Bindemittel als Hilfsmittel beim Aufvulkanisieren von Natur- oder synthetischen Kautschukmischungen auf metallische oder sonstige starre Unterlagen, welches besteht aus Mischungen auf Basis von Chlorkautschuk, nachbromiertem Dichlorpolybutadien sowie Chinondioxim und dadurch gekennzeichnet ist, daß die Bindemittel frei sind von Oxidationsmitteln für das Chinondioxim.

Nach einer besonderen Ausführungsform enthalten die erfindungsgemäßen Bindemittel 1 bis 30, insbesondere 5 bis 25 Gew.-%, an Schwefel, bezogen auf die Summe aus Chlorkautschuk und nachbromiertem Dichlorbutadien. Weiterhin ist vorteilhaft, wenn noch bis zu 15 Gew.-%, bezogen auf die beiden vorgenannten Bestandteile, an Ruß vorhanden ist.

Die erfindungsgemäßen Gummi/Metall-Bindemittel basieren im wesentlichen auf Chlorkautschuk, der als Rohstoff zur Herstellung derartiger Zusammensetzungen seit je her eingesetzt wird. Ein wesentlicher weiterer Bestandteil ist nachbromiertes Polydichlorbutadien, das ebenfalls seit Jahrzehnten für diesen Zweck verwendet wird. Auch der Einsatz von Ruß, zusammen mit den beiden genannten Komponenten und zahlreichen weiteren Hilfsstoffen, ist in der Kautschuktechnologie üblich. Dabei weiß der Fachmann, welche Rußsorten geeignet sind bzw. er ist in der Lage, durch einfache Versuche eine geeignete Rußtype zu finden.

Ebenfalls ist es lange schon Stand der Technik, diese Bestandteile mit p-Dinitrosobenzol zu kombinieren. Man hat früher schon versucht, diesen Stoff zu ersetzen und hat statt dessen p-Chinondioxim zusammen mit einem Oxidationsmittel verwendet, so daß sich bei den durch das Aufvulkanisieren bzw. Vorheizen notwendigen Temperaturen das wirksame p-Dinitrosobenzol bildete.

Bisher war man jedoch der Meinung, daß Chinondioxim als solches nicht wirksam ist, sondern nur zusammen mit einem Oxidationsmittel verwendet werden kann. Durch die vorliegende Erfindung ist dieses Vorurteil überwunden worden und es wird gezeigt, daß Chinondioxim sehr wohl zu guten Gummi/Metall-Bindungen führen kann, wenn es zusammen mit den üblicherweise eingesetzten Bestandteilen Chlorkautschuk, nachbromierten Polydichlorbutadien und vorzugsweise Ruß eingesetzt wird. Von besonderem Vorteil hat es sich auch erwiesen, neben diesen Bestandteilen den Bindemitteln noch etwa 1 bis 25 Gew.-% gemahlenen Schwefel hinzuzufügen.

Zur Herstellung der Gummi/Metall-Bindemittel werden die einzelnen Komponenten zweckmäßig zunächst in einem Lösungsmittel gelöst bzw. suspendiert. Bevorzugte Lösungsmittel sind Ketone oder Ester wie Methylethylketon, Methylisobutylketon, Diethylketon, Ethylacetat, Ethylenglykoldiacetat und Butylacetat. Weiterhin kommen in Betracht chlorierte Kohlenwasserstoffe wie Trichlorethan, Trichlorethylen, Perchlorethylen, aber auch aromatische Lösungsmittel wie Toluol oder Xylol. Die Menge des eingesetzten Lösungsmittels kann über eine weiten Bereich variieren, im allgemeinen wird man aber so viel verwenden, daß der Haftvermittler bzw. das Bindemittel einen Feststoffgehalt von 5 bis etwa 40 Gew.-% Trockensubstanz aufweist. Nach einer vorteilhaften Ausführungsform verwendet man eine Suspension bzw. Lösung in den vorgenannten Lösungsmitteln, die sich auszeichnet durch einen Gehalt an 3 bis 90 Gew.-Teilen Chlorkautschuk, 5 bis 40 Gew.-Teilen nachbromiertem Polydichlorbutadien, 5 bis 20 Gew.-Teilen Ruß, 5 bis 30 Gew.-Teilen Chinondioxim und 1 bis 25 Gew.-Teilen gemahlenem Schwefel. In vielen Fällen hat es sich als zweckmäßig erwiesen, die zu verbindenden Metallteile gemäß dem Stand der Technik vor dem Auftrag des Bindemittels mit einem Primer zu beschichten.

Derartige Primer für Gummi/Metall-Bindemittel sind seit langem Stand der Technik und können aus Lösungen bzw. Suspensionen von Chlorkautschuk und noch reaktive Gruppen aufweisenden Phenolharzen sowie Pigmenten wie etwa Titandioxid, Zinkoxid, Ruß oder dergleichen bestehen. Sie werden in relativ dünnen Schichten nach der üblichen Vorbehandlung der Oberflächen durch Strahlen mit Stahlkies, Entfetten mit Löungsmitteln usw., aufgetragen.

Nach dem Auftragen des Primers und der Beschichtung mit dem Bindemittel läßt man das Lösungsmittel gründlich abdunsten. Wenn die Bindemittelfilme trocken sind, werden die Metallteile in die Presse eingegeben. Nach dem Vorheizen auf die geeignete Temperatur wird die Kautschukmischung aufgebracht und die eigentliche Vulkanisation erfolgt bei Temperaturen zwischen etwa 120 und 190 °C unter Druck während etwa 3 bis 15 Minuten. Die Vulkanisationsbedingungen richten sich nach den verwendeten Kautschukmischungen und sind auf das Vulkanisationsverhalten derselben sowie das zu bindende Substrat abzustimmen.

Die erfindungsgemäßen Gummi/Metall-Bindemittel sind geeignet, um natürlichen und synthetischen Kautschuk an Metalle und andere feste Substrat wie Kunststoffe, Holz und gegebenenfalls auch Gewebe im Rahmen der Vulkanisation zu binden. Selbstverständlich ist eine entsprechende Vorbehandlung der Oberflächen erforderlich und gegebenenfalls können auch verschiedene Kautschuksorten mit dem erfindungsgemäßen Gummi/Metall-Bindemittel miteinander verbunden werden.

Von besonderem Vorteil ist bei der vorliegende Erfindung, daß ein von Oxidationsmitteln freies Bindemittel gefunden wurde, das viele Vorteile von Dinitrosobenzol enthaltenden bzw. Chinondioxim plus Oxidationsmittel enthaltenden Bindemitteln aufweist. Beachtenswert ist insbesondere die gute Vorheizbeständigkeit, die noch deutlich verbessert wird bei Anwesenheit von Schwefel und so zu verbesserten Bindungen führt.

## Beispiele

In den nachfolgenden Beispielen wurde die Prüfung an Stahl durchgeführt und zwar nach ASTM-D429 Methode B und C. Die Vorbehandlung erfolgte durch Entfetten mit Trichlorethan, Dampf und Strahlen mit Hartgußkies. Die Vulkanisation wurde in einer handelsüblichen Presse durchgeführt. Die durchgeführten Zerreißprüfungen wurden nach 24 stündiger Lagerung der Verbundteile bei Zimmertemperatur vorgenommen.

Es wurden Bindemittel hergestellt durch Suspensionen bzw. Lösen von

146 g Chlorkautschuk

62 g bromiertes Dichlor (2,4)-polybutadien

11 g Bleiphosphit

21 g Ruß

in einem Gemisch aus

640 g Xylol und

120 g Perchlorethylen.

Zu dieser Grundrezeptur wurden dann durch Rühren verteilt

1) 20 g p-Chinondioxim

2) 40 g p-Chinondioxim

3) 40 g p-Chinondioxim und

10 g gemahlener Schwefel

4) 40 g p-Chinondioxim und

20 g gemahlener Schwefel

Zur Prüfung der Bindefestigkeit an Stahloberflächen wurden diese vorbehandelt mit einem für Gummi/Metall-Bindemittel bekannten handelsüblichen Primer, der im wesentlichen besteht aus einer Lösung/Suspension von je 8 Gew.-Teilen Chlorkautschuk und noch reaktive Gruppen enthaltendem Phenolharz, 5 Gew.-Teilen Titandioxid sowie je 1,5 Gew.-Teilen Zinkoxid und Ruß in 80 Gew.-Teilen Methylisobutylketon.

Die verwendeten Kautschukmischungen wiesen die in der nachfolgenden Tabelle 1 wiedergegebene Zusammensetzung auf. Die Zahlen bedeuten Gewichtsteile.

Tabelle 3

| Bestandteile | I | II | III | IV |
|---|---|---|---|---|
| Naturkautschuk | 100 | 100 | --- | --- |
| Styrol-Butadienkautschuk | --- | --- | 100 | --- |
| Acrylnitril-Butadienkautschuk | --- | --- | --- | 100 |
| Stearinsäure | 2 | 2 | 1 | 1 |
| Zinkoxid | 5 | 5 | 5 | 5 |
| 2,2,4-Trimethyl-1,2-dihydrochinolin | 1 | 1 | --- | --- |
| N-Isopropyl-N-phenyl-phenylendiamin | 1 | 1 | --- | --- |
| Paraffinwachs | 1 | 1 | --- | --- |
| Ruß N 550 | 20 | 20 | --- | --- |
| Ruß N 330 | --- | --- | 50 | --- |
| Ruß N 770 | --- | --- | --- | 65 |
| naphtenisches Mineralöl | 3 | 3 | --- | --- |
| polymerisierte Kohlenwasserstoffe | --- | --- | 8 | --- |
| Pinen-terpenharz | --- | --- | --- | 10 |
| Dibutylphthalat | --- | --- | --- | 10 |
| Tetramethylthiuramdisulfid | 1,00 | 1,20 | --- | --- |
| Tetramethylthiurammonosulfid | --- | --- | --- | 0,31 |
| Dibenzothiazyldisulfid | --- | 0,80 | --- | --- |
| Benzothiazyl-2-sulfenmorpholid | --- | --- | --- | --- |
| Benzothiazyl-2-cyclohexylsulfenamid | 2,20 | --- | 0,95 | --- |
| Morpholindisulfid | --- | 0,75 | --- | --- |
| Schwefel, gemahlen | 0,25 | 0,20 | 1,60 | 1,00 |

Zur Haftprüfung an Stahlkörpern wurde gemäß ASTM-D429, Methode C verfahren. In der nachfolgende Tabelle 2 ist in Abhängigkeit von der eingesetzten Kautschukmischung I bis IV sowie des Bindemittels gemäß Beispiel 1 bis 4 wiedergegeben die Reißfestigkeit in kN.

EP 0 278 375 B1

4

Tabelle 2

| Kautschuk | Beispiele | | | |
|---|---|---|---|---|
| | 1 | 2 | 3 | 4 |
| I | 0,52 | 0,60 | 0,80 | 0,71 |
| II | 0,50 | 0,57 | 0,86 | 0,72 |
| III | 2,24 | 2,18 | 2,32 | 2,21 |
| IV | 2,27 | 2,26 | 2,41 | 2,38 |

Zur Bestimmung der Vorheizbeständigkeit wurde unter Verwendung der Kautschukmischung I vor dem Kontakt mit der Kautschukmischung der Stahlkörper

3 bzw. 5 bzw. 7 oder 8 Minuten

auf eine Temperatur von 160 °C erwärmt. Das Aufvulkanisieren der Kautschukmischung erfolgte ebenfalls bei 160 °C und zwar 10 Minuten lang.

Dabei ergaben sich bei der Prüfung nach ASTM-D429, Methode B, die in der nachstehenden Tabelle 3 aufgeführten Schälwerte in daN/2,5 cm sowie die Schälbilder in % Bruch in der Kautschukschicht gemäß Definition nach ASTM ( = %R).

## T a b e l l e  3

| Bindemittel/ Beispiel | V o r h e i z z e i t | | | | | | | |
|---|---|---|---|---|---|---|---|---|
| | 3 min | | 5 min | | 7min | | 8 min | |
| | | % R | | % R | | % R | | % R |
| 1 | 14 | 10 | 7 | 0 | 0 | 0 | 0 | 0 |
| 2 | 20 | 20 | 12 | 5 | 10 | 0 | 9 | 0 |
| 3 | 32 | 100 | 29 | 100 | 24 | 8 | 18 | 20 |
| 4 | 28 | 100 | 25 | 100 | 25 | 100 | 24 | 100 |

Vergleichsversuch

Es wurde ein Bindemittel verwendet, das weder Chinondioxim noch Schwefel enthielt. Dabei wurde in keinem Fall eine Bindung erreicht. Stahl und Kautschuk trennten sich bei Herausnahme aus der Vulkanisationspresse.

## Patentansprüche

1. Thermostabiles Gummi-/Metall-Bindemittel zur Verwendung als Hilfsmittel beim Aufvulkanisieren von Natur- oder synthetischen Kautschukmischungen auf metallische oder sonstige starre Unterlagen, bestehend aus Mischungen auf Basis von 30 bis 90 Gew.-Teilen Chlorkautschuk, 10 bis 40 Gew.-Teilen nachbromiertem Dichlorpolybutadien sowie 5 bis 30 Gew.-Teilen Chinondioxim, dadurch gekennzeichnet, daß die Bindemittel frei sind von Oxidationsmitteln für das Chinondioxim.

2. Bindemittel nach Anspruch 1, dadurch gekennzeichnet, daß das Bindemittel 1 bis 30, insbesondere 5 bis 25 Gew.-%, an Schwefel, bezogen auf die Summe aus Chlorkautschuk und nachbromiertem Polydichlorbutadien, sowie gegebenenfalls bis zu 15 Gew.-%, bezogen auf die beiden genannten Bestandteile, an Ruß enthält.

3. Gummi/Metall-Bindemittel nach den Ansprüchen 1 und 2, gekennzeichnet durch einen Gehalt an

30 bis 90 Gew.-Teilen Chlorkautschuk,
10 bis 40 Gew.-Teilen nachbromiertem Polydichlorbutadien,
5 bis 20 Gew.-Teilen Ruß,
5 bis 30 Gew.-Teilen Chinondioxim und
1 bis 25 Gew.-Teilen gemahlenem Schwefel.

## Claims

1. A heat-stable rubber-to-metal bonding agent for use as an auxiliary in the vulcanization of natural or synthetic rubber mixtures onto metallic or other rigid substrates, consisting of mixtures based on 30 to 90 parts by weight chlorinated rubber, 10 to 40 parts by weight after-brominated dichloropolybutadiene and 5 to 30 parts by weight quinone dioxime, characterized in that bonding agents are free from oxidizing agents for the quinone dioxime.

2. Bonding agents as claimed in claim 1, characterized in that they contain from 1 to 30% by weight and, more particularly, from 5 to 25% by weight sulfur, based on the sum of chlorinated rubber and after-brominated polydichlorobutadiene, and optionally up to 15% by weight, based on the two constituents mentioned, of carbon black.

3. Rubber-to-metal bonding agents as claimed in claims 1 and 2, characterized by a content of
30 to 90 parts by weight chlorinated rubber,
10 to 40 parts by weight after-brominated polydichlorobutadiene,
5 to 20 parts by weight carbon black,
5 to 30 parts by weight quinone dioxime and
1 to 25 parts by weight ground sulfur.

## Revendications

1. Liant caoutchouc /métal thermostable pour utilisation en tant qu'adjuvant lors de l'application par vulcanisation de compositions de caoutchouc naturel ou synthétique sur des supports métalliques ou autres supports rigides, constitué de mélanges à base de 30 à 90 parties en poids de caoutchouc chloré, de 10 à 40 parties en poids de dichloropolybutadiène post-bromé ainsi que de 5 à 30 parties en poids de quinonedioxime, caractérisé en ce que les liants sont exempts d'oxydant pour la quinonedioxime.

2. Liant selon la revendication 1, caractérisé en ce que le liant contient de 1 à 30, en particulier de 5 à 25 % en poids de soufre, par rapport à la somme du caoutchouc chloré et du polydichlorobutadiène post-bromé, ainsi qu'éventuellement jusqu'à 15 % en poids, par rapport aux deux composants cités, de noir de carbone.

3. Liant caoutchouc/métal selon les revendications 1 et 2, caractérisé par une teneur
de 30 à 90 parties en poids en caoutchouc chloré,
de 10 à 40 parties en poids en polydichlorobutadiène post-bromé,
de 5 à 20 parties en poids en noir de carbone,
de 5 à 30 parties en poids en quinonedioxime, et
de 1 à 25 parties en poids en soufre broyé.